(19) Europäisches Patentamt
European Patent Office
Office européen des brevets

(11) **EP 3 101 839 A1**

(12) **EUROPEAN PATENT APPLICATION**

(43) Date of publication:
**07.12.2016 Bulletin 2016/49**

(51) Int Cl.:
*H04L 12/18* (2006.01)   *H04N 7/15* (2006.01)

(21) Application number: **15305850.8**

(22) Date of filing: **03.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **ONNO, Stéphane**
**35576 Cesson-Sévigné (FR)**

• **OZEROV, Alexey**
**35576 Cesson-Sévigné (FR)**
• **DUONG, Quang Khanh Ngoc**
**35576 Cesson-Sévigné (FR)**
• **LEFEBVRE, Frédéric**
**35576 Cesson-Sévigné (FR)**

(74) Representative: **Huchet, Anne et al**
**TECHNICOLOR**
**1-5, rue Jeanne d'Arc**
**92130 Issy-les-Moulineaux (FR)**

(54) **METHOD AND APPARATUS FOR ISOLATING AN ACTIVE PARTICIPANT IN A GROUP OF PARTICIPANTS USING LIGHT FIELD INFORMATION**

(57)   Isolation of an active participant in a group of participants commences by capturing images of participants in the conference using a light field camera. Identification of an active one of the participants in the conference then occurs. Thereafter, adjustment of the participants' images occurs to isolate the active participant by adjusting image focus based on depth information obtained from the images captured by the light field camera.

FIG. 1

EP 3 101 839 A1

## Description

TECHNICAL FIELD

This disclosure relates to isolating an active participant in a group of participants.

BACKGROUND ART

Typical audio-video conference systems enable participants at distant locations to interact with each other on-line. Such systems include one or more video cameras to capture participants' images as well as multiple microphones to capture participants' audio. Present-day audio-video conference systems configured as described above, operate in a static mode with regard to which participants are active and which are not. Thus, such systems do not render the displayed participants' images and audio to isolate an active participant, e.g., a participant that is currently speaking.

Moreover, present day video conference systems use conventional video cameras, which typically lack the ability to focus on a particular participant (e.g., an "active" participant) within a group of participants, especially if the participants sit close together. Thus, with conventional television cameras, focusing on an active participant will likely also include participants that reside to close to the active participant.

Thus, a need exists for an improved method and apparatus that overcomes aforementioned disadvantages, especially, the ability to isolate a currently active participant from other participants in the group.

BRIEF SUMMARY

Briefly, in accordance with an aspect of the present principles, a method for isolating an active participant in a group of participants includes capturing images of participants in the conference using a light field camera. Identification of an active one of the participants in the conference then occurs. Thereafter, rendering of the participants' images occurs to isolate the active participant by adjusting image focus based on depth information obtained from the images captured by the light field camera.

It is an object of the present principles to provide a technique for isolating an active participant in a group of participants;

It is another object of the present principles to accomplish isolation of an active participant in a group of participants automatically;

It is another object of the present principles to accomplish isolation of an active participant by adjusting the image focus based of depth information obtained from images captured by the light field camera.

BRIEF SUMMARY OF THE DRAWINGS

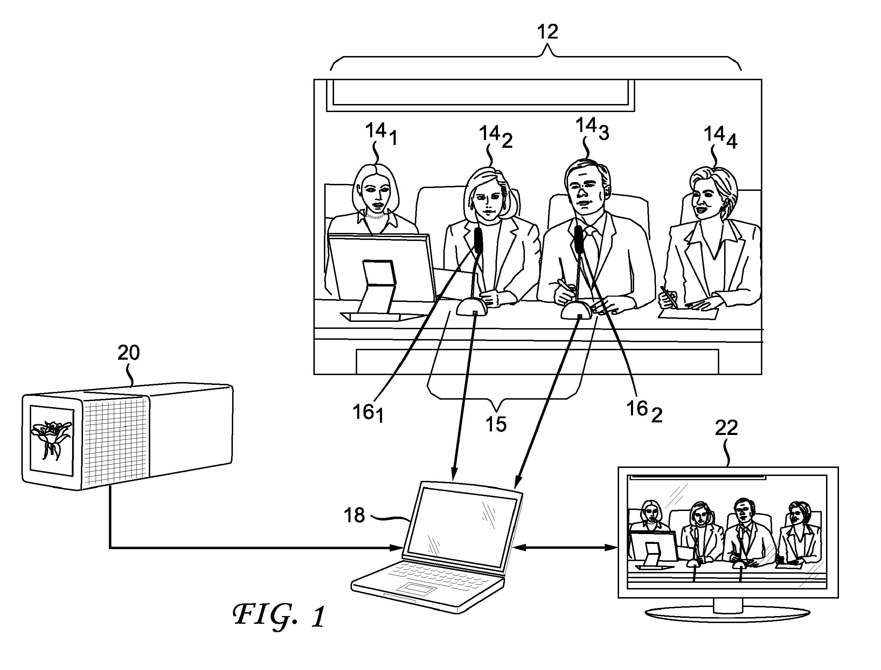

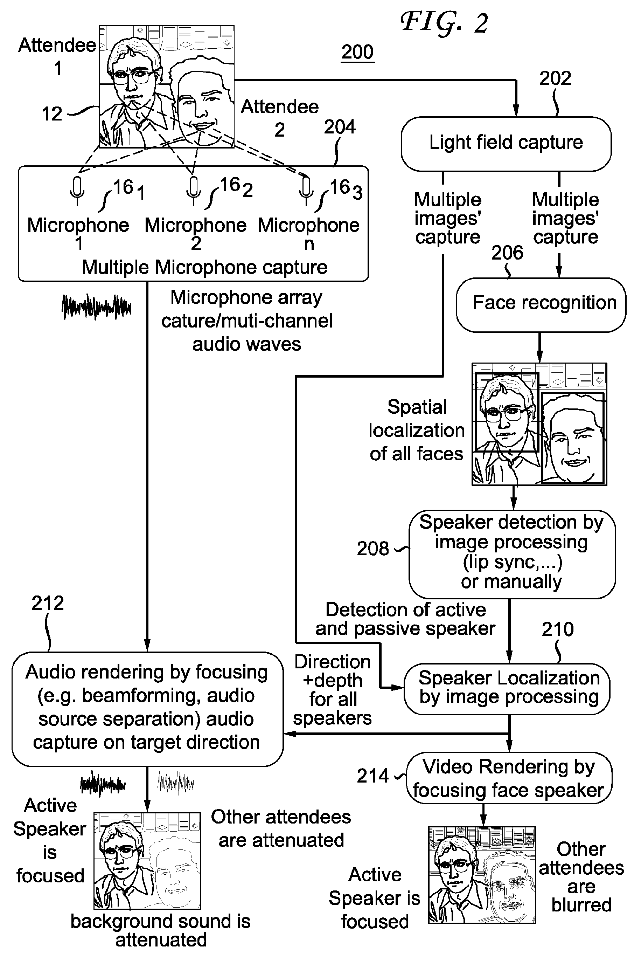

FIGURE 1 depicts a block schematic diagram of an exemplary apparatus for practicing the participant isolation technique of the present principles, and FIGURE 2 depicts a block schematic diagram of a flowchart depicting the steps of the participant isolation technique of the present principles.

DETAILED DESCRIPTION

FIGURE 1 depicts an exemplary system 10 in accordance with an aspect of the present principles for isolating an active participant (e.g., a participant currently speaking) in a group 12 of participants. In the illustrated embodiment, the group 12 includes participants $14_1$, $14_2$, $14_3$ and $14_4$, although the number of participants could include more or less than the four participants depicted in FIG. 1. The system 10 includes an array 15 of microphones, illustratively depicted by microphones $16_1$ and $16_2$, for capturing audio of the participants $14_1$, $14_2$, $14_3$ and $14_4$. In the exemplary embodiment of FIG. 1, the number of participants exceeds the number of microphones so some participants share a microphone. In other instances, the number of microphones in the array 15 will equal the number of participants, so each individual participant has his or her own microphone. In practice, the greater the number of microphones, the easier it becomes to separate the audio associated with the active participant. As discussed in detail hereinafter, the system 10 advantageously renders the audio from the array of microphones 15 to mute all but the active participant (e.g., the participant currently speaking). By way of such audio processing, if a new participant begins speaking, muting of the other participants can occur without any distortion. Thus, after rendering only the audio of the active participant remains audible, even though all of the microphones in the array 15 still remain active.

The system 10 includes a computer 18, illustratively depicted as a laptop computer. However, the computer 18 could take other forms such as a desktop computer, a server, smart phone or a set top-box for example. The computer 18 receives audio from each of the microphones $16_1$ and $16_2$ of the array 15. Depending on the number of microphones in the array 15 and the number of available ports on the computer 18, the system 10 could include a port interface (not shown) for interfacing multiple microphones to the computer.

The system 10 also includes at least one light field (plenoptic) camera 20. Typical light field cameras are characterized by an array of micro-lenses (not shown) in the optical path of an otherwise conventional image sensor (not shown), which enables the light field camera to sense intensity, color, and directional information. Present day manufacturers of such light field cameras include Lytro and Raytrix among others. The light field camera 20 provides its video signal to the computer 18, which can display the image captured by the light field camera on an external monitor 22. If the monitor 22 has the ability to reproduce audio, then the monitor will reproduce the audio from the computer 18 as processed by the computer.

The computer 18 makes use of image depth information obtained from the light field camera 20 to adjust the focus so that the pixels comprising the image of the active participant remain in focus while the pixels lying outside those comprising the active participant remain out of focus. Obtaining an image acquired using a light-field camera, such as the light filed camera 20 enables changing of the focus a posteriori. From image acquired by the light-field camera 20, the computer 18 can obtain sub-images, each of them corresponding to a slightly different viewpoint. The computer 18 can easily reconstruct a depth map of the objects in the sub-images and then set the focus arbitrarily on objects at depth D, while blurring the objects at depth D' different from D. In this way, the computer 18 can simulate a "real" photograph taken with camera (not shown) having a focal length D with objects more blurred the further they are from the focal plane of the camera. Moreover, the depth of field can also be chosen arbitrarily, provided it is not greater than the one corresponding to the physical aperture of the light-field camera (which is quite large). The size b of the blur kernel for objects at depth D' can be computed using the chosen depth focus D and the virtual aperture A:

$$b = A \frac{|D - D'|}{D'} = A \left| 1 - \frac{D}{D'} \right|$$

FIGURE 2 depicts in flow chart form the steps of a process 200 in accordance with the present principles for isolating the active participant in the group 12 of participants of FIG. 1. The process 200 of FIG. 2 commences by capturing the image of the group 12 of participants by the light field camera 20 of FIG. 1 during step 202. The audio associated with the group 12 of participants undergoes capture by microphones $16_1$-$16_3$ in an array of microphones during step 204. (Note the array of microphones depicted in FIG 2 includes three microphones $16_1$-$16_3$ as compared to the two microphones $16_1$ and $16_2$ in the array 15 depicted in FIG. 1.) The image capture and audio capture typically occurs simultaneously although steps 202 and 204 could occur at separate times, as long as the time difference between them remains relatively short to avoid lag.

Following steps 202 and 204, face recognition occurs during step 206 to localize faces in the image captured by the light field camera 20 of FIG. 1. The computer 18 of FIG. 1 performs such face recognition during step 206 by extracting features characteristic of each human face and thereafter the computer separates the face(s) from the background. Presently, there exists a variety of commercially available software programs for accomplishing this task.

Thereafter, detection (e.g., identification) of the active participant occurs during step 208. Identification of the active participant can occur manually by an operator based on observations of the participants to determine which is currently speaking. In some instances, if the operator is familiar with the various participants' voice, the operator can use that information in addition to, or even in place of a visual observation to identify the active participant.

Identification of the active participant during step 208 can also occur automatically. The computer 18 could analyze the faces detected during step 206 for lip movement to determine which participant currently speaking to identify that person as the active participant. Another approach to automatic identification of the active participant could include identifying all of the participants in the group of participants 12 by matching the faces recognized during step 206 to known pictures of participants. The computer 18 could then perform voice recognition on the audio to identify the individual participant currently speaking and then match the voice of the person actually speaking to the face of a corresponding participant to identify that participant as the active participant.

Having identified the active participant, the computer 18 then undertakes speaker (participant) localization during step 210, whereupon the computer 18 of FIG. 1 processes the image captured by the light field camera 20 to establish a depth and direction for all participants. Thereafter, the computer 18 executes step 212 to render the audio from the microphone array from the microphone array to mute or otherwise attenuate the audio from all but the active participant localized during step 210. The computer 18 can employ various techniques to render the audio in this manner. For example, the computer 18 could employ beamforming to control the phase and relative amplitude of the audio from each microphone to create a pattern of constructive and destructive interference in the wave front associated with the audio from the microphones in the array. The computer 18 could also make use of audio source separation techniques as well as known audio capture techniques to mute or otherwise attenuate the audio from all but the active participant using depth and direction information from the light field image capture of the participants.

The computer 18 of FIG. 1 isolates the image of the active participant during step 214. During step 214, the computer 18 renders the video image to focus on the active participant by blurring the image of other participants. As discussed above, the computer 18 makes use of image depth information obtained from the light field camera 20 to adjust the focus so that the pixels comprising the image of the active participant remain in focus while the pixels lying outside those comprising the active participant remain out of focus. The computer 18 accomplishes this task by constructing a depth map of the objects in sub-images obtained from the light field camera 20 and then setting the focus arbitrarily on objects at depth D, while blurring the objects at depth D' different from D. In this way, the light field information from the light field camera guides the video rendering performed during step 212.

While the technique of the present principles for isolating an active participant within a group of participants has been described in the context of an audio-video conferencing system, the technique has application in many other environments. For example, the technique could be used in the context of capturing the audio and images of a live show, for example a concert or sporting event, to enable isolation of a participant among a group of participants. The technique could enable moving of a microphone in a given direction or changing the audio focus of a given directional microphone to increase audio zoom accuracy.

Moreover, the isolation technique of the present principles could be employed during post processing, assuming both video and depth information undergo capture at shooting stage and remain available at post-production time. At this stage, the director or other personnel can easily modify a given focus plan without shooting the scene again because of a lack of a corresponding audio source. To that end, the process of the present principles can be semi-automatic at least for a preview or useful for fine tuning audio from video.

Implementation of the technique for isolating the active participant in a group of participants described can occur by executing instructions on a processor, and storage of such instructions (and/or data values produced by an implementation) can take place on a processor-readable non-transitory medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). Such instructions can reside in an application program tangibly embodied on a processor-readable medium. Such Instructions can exist in hardware, firmware, software, or a combination. Further, such instructions can exist in an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal can undergo formatting to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal can undergo transmission over a variety of different wired or wireless links, as is known. The signal may be stored on a processor-readable medium.

A number of implementations have been described. Nevertheless, various modifications can occur. For example, elements of different implementations can undergo combination, modification or removal to produce other implementations. Additionally, one of ordinary skill will understand that other structures and processes can undergo substitution for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for isolating an active participant in a group of participants, comprising
   capturing images of participants in the group of participants (202) by a light field camera (20);
   identifying an active one of the participants in the group of participants (206); and rendering the participants' images to isolate the active participant (208) by adjusting image focus based on depth information obtained from images captured by the light field camera.

2. The method according to claim 1 comprising;
   obtaining sub-images within the images captured by the light field camera, each sub-image corresponding to a different viewpoint;
   constructing a depth map of objects in the sub-images; and
   setting a focus on an object at particular depth value while blurring the objects at depth values different than the particular depth value.

3. The method according to claim 1 wherein identification of the active participant occurs automatically.

4. The method according to claim 1 wherein identification of the active participant occurs manually.

5. A system for isolating an active participant in a group of participants, comprising,
a light field camera (20) capturing images of participants in the conference;
a processor (18) coupled to the camera and the array of microphones, the processor configured to (a) identify an active one of the participants in the group of participants (206); and (b) render the participants' images to isolate the active participant (208) by adjusting image focus based on depth information obtained from images captured by the light field camera.

6. The system according to claim 5 wherein the renders the participants' images to isolate the active participant by (a) obtaining sub-images within the images captured by the light field camera, each sub-image to a different viewpoint; (b) constructing a depth map of objects in the sub-images; and (c) setting a focus on an object at particular depth value while blurring the objects at depth values different than the particular depth value.

7. The system 9 wherein the processor identifies the active participant automatically.

8. The system according to claim 9 wherein the processor identifies the active participant in response to manual input from an operator.

*FIG. 1*

*FIG. 2*

200

Attendee 1

12

Attendee 2

204

202

Light field capture

Multiple images' capture

Multiple images' capture

$16_1$  $16_2$  $16_3$

Microphone 1   Microphone 2   Microphone n

Multiple Microphone capture

Microphone array cature/muti-channel audio waves

206

Face recognition

Spatial localization of all faces

208

Speaker detection by image processing (lip sync,...) or manually

Detection of active and passive speaker

210

212

Direction +depth for all speakers

Speaker Localization by image processing

Audio rendering by focusing (e.g. beamforming, audio source separation) audio capture on target direction

214

Video Rendering by focusing face speaker

Active Speaker is focused

Other attendees are attenuated

Active Speaker is focused

Other attendees are blurred

background sound is attenuated

7

Europäisches
Patentamt

European
Patent Office

Office européen
des brevets

## EUROPEAN SEARCH REPORT

Application Number

EP 15 30 5850

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/176663 A1 (CUTLER ROSS [US] ET AL) 26 June 2014 (2014-06-26) * abstract * * paragraph [0003] * * paragraph [0016] * * paragraphs [0034] - [0050] * * claims 1,4,8,9 * | 1-8 | INV. H04L12/18 H04N7/15 |
| A | US 2010/309284 A1 (SAMADANI RAMIN [US] ET AL) 9 December 2010 (2010-12-09) * abstract * * paragraphs [0023] - [0031] * | 1-8 | |
| A | US 2011/093273 A1 (LEE BOWON [US] ET AL) 21 April 2011 (2011-04-21) * abstract * * paragraph [0015] * * paragraphs [0025] - [0034] * * paragraphs [0002] - [0059] * | 1-8 | |

TECHNICAL FIELDS
SEARCHED        (IPC)

H04N
H04L

The present search report has been drawn up for all claims

| Place of search | Date of completion of the search | Examiner |
|---|---|---|
| The Hague | 7 December 2015 | Naci, Suphi Umut |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 5850

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2015

| Patent document cited in search report | | Publication date | Patent family member(s) | | Publication date |
|---|---|---|---|---|---|
| US 2014176663 | A1 | 26-06-2014 | CN 104982029 A | | 14-10-2015 |
| | | | EP 2920958 A1 | | 23-09-2015 |
| | | | KR 20150097536 A | | 26-08-2015 |
| | | | US 2014176663 A1 | | 26-06-2014 |
| | | | US 2015334348 A1 | | 19-11-2015 |
| | | | WO 2014100455 A1 | | 26-06-2014 |
| US 2010309284 | A1 | 09-12-2010 | NONE | | |
| US 2011093273 | A1 | 21-04-2011 | NONE | | |

EPO FORM P0459

For more details about this annex : see Official Journal of the European Patent Office, No. 12/82